Europäisches Patentamt

(19) **European Patent Office**

**Office européen des brevets**

(11) Publication number: **0 225 693 B1**

## EUROPEAN PATENT SPECIFICATION

(45) Date of publication of patent specification: **27.02.91**

(51) Int. Cl.⁵: **G03G 15/04**, G06K 15/12, H04N 1/036

(21) Application number: **86307673.3**

(22) Date of filing: **03.10.86**

(54) Electro luminescence device and electrophotographic printing system using the same.

(30) Priority: **04.10.85 JP 220262/85**
**06.11.85 JP 247264/85**
**07.02.86 JP 23971/86**
**18.04.86 JP 90354/86**
**13.05.86 JP 109799/86**

(43) Date of publication of application:
**16.06.87 Bulletin 87/25**

(45) Publication of the grant of the patent:
**27.02.91 Bulletin 91/09**

(84) Designated Contracting States:
**DE FR GB**

(56) References cited:
**DE-A- 2 748 725**      **DE-A- 3 322 247**
**DE-A- 3 333 203**      **GB-A- 1 132 500**
**US-A- 4 295 137**      **US-A- 4 478 504**

(73) Proprietor: **FUJITSU LIMITED**
**1015, Kamikodanaka Nakahara-ku**
**Kawasaki-shi Kanagawa 211(JP)**

(72) Inventor: **Sato, Seii**
**18-1, Mouraidai 1-chome**
**Atsugi-shi Kanagawa 243(JP)**
Inventor: **Wakitani, Masayuki Fujitsu Shataku B-107**
**1380, Kamikodanaka Nakahara-ku**
**Kawasaki-shi Kanagawa 211(JP)**
Inventor: **Hasegawa, Tadashi Kopo Amano B-203**
**975-12, Aiko**
**Atsugi-shi Kanagawa 243(JP)**
Inventor: **Miura, Shoshin**
**2-12-3, Shinjo Nakahara-ku**
**Kawasaki-shi Kanagawa 211(JP)**
Inventor: **Andoh, Shizuo**
**2-12-10, Shinjo Nakahara-ku**
**Kawasaki-shi Kanagawa 211(JP)**
Inventor: **Takizawa, Hideaki Kurihira Haitsu B-101**
**1-17-8, Kurikidai Asao-ku**
**Kawasaki-shi Kanagawa 215(JP)**

Rank Xerox (UK) Business Services

Inventor: **Kobayashi, Tetsuya**
**Kopo Miya 10 269, Kitayana**
**Hadano-shi Kanagawa 257(JP)**
Inventor: **Takahara, Kazuhiro Fujitsu Shataku**
**A-301**
**1380, Kamikodanaka Nakahara-ku**
**Kawasaki-shi Kanagawa 211(JP)**
Inventor: **Kawada, Toyoshi**
**1098-18, Kamiogino**
**Atsugi-shi Kanagawa 243-01(JP)**
Inventor: **Hoshiya, Takayuki Fujitsu Atsugiryo**
**306**
**2-3-10, Sakae-cho**
**Atsugi-shi Kanagawa 243(JP)**
Inventor: **Kisumi, Shintaro**
**Shiti Kaimu 203 4-13-23, Higashihara**
**Zami-shi Kanagawa 228(JP)**

(74) Representative: **Fane, Christopher Robin King**
**et al**
**HASELTINE LAKE & CO. Hazlitt House 28**
**Southampton Buildings Chancery Lane**
**London, WC2A 1AT(GB)**

**Description**

The present invention relates to an electrophotographic printer of the type employing electroluminescence (EL) devices.

EL devices are extensively used as light sources for a variety of apparatuses. Such an EL device includes at least one row of X direction electrode(s) and a plurality of Y direction electrodes intersecting the X electrode(s). When the capacity of light emitting elements defined by the X direction electrode(s) and the Y direction electrodes in the EL device is increased, the number of electrodes is proportionally increased. The large-scale EL device of the prior art, however, suffers from the disadvantage that the number of circuit elements driving the electrodes must be increased, and accordingly, high production costs become inevitable, and the speed at which all of the electrodes can be driven is lowered.

Japanese Unexamined Patent Publication (JPP) No. 59-214672, entitled "an electrophotographic printer", Ishitobi, et al. published on December 4, 1984, discloses the use of an EL panel for an electrophotographic printer. The EL panel is used as a light source instead of a laser optical system or a light emitting diode (LED) array. The electrophotographic printer using the EL panel generally provides the merits of low manufacturing cost, reduced size of the printer, and a high quality print out. JPP 59-214672, however, discloses only the use of the EL panel of the type set forth above and a principle of the light emitting operation of the EL panel.

The EL panel used for the electrophotographic printer must be provided with a large number of EL elements in the array thereof, for example, 1024 or 2048. Accordingly, the electrophotographic printer disclosed in JPP 59-214672 suffers from the same disadvantages set forth above regarding the general EL device.

In addition, compared with the laser optical and the LED array systems, a prior EL panel involves an inherent disadvantage of a low light intensity. For example, the light intensity of an EL element is approximately one-hundredth (1/100) that of one LED. This means that the exposure needed to form a latent image on a light sensitive medium in an electrophotographic printer employing an EL panel may be longer than that in a printer employing an LED array.

It is desirable to provide an electrophotographic printer employing an EL device having an electrode arrangement including a relatively reduced number of driving electrodes.

It is also desirable to provide an electrophotographic printer employing an EL device having an electrode arrangement by which the manufacturing cost and device size are reduced and which is capable of emitting a relatively high intensity of light, and to provide an electrophotographic printer having a control circuit suitable for the control and driving of the above EL devices.

According to the present invention there is provided an electrophotographic printer of the kind including a rotary light-sensitive drum and an electroluminescence device mounted alongside the drum and energisable selectively to produce an image on a light-sensitive circumferential layer of that drum, which device comprises: a light-emitting layer located between and electrically insulated from an elongate electrode, which extends in a direction parallel to the axis of rotation of the said drum, and an array of opposing transparent electrode portions formed on a transparent substrate, which portions extend transversely with respect to the said direction so as to cross the said elongate electrode at respective different locations therealong, thereby defining an array of electroluminescence elements, at the said respective different locations, any one of which elements can be energised selectively by application of a predetermined A.C. energising pulse between the said elongate electrode and the opposing electrode portion that crosses that elongate electrode at the location concerned; characterised in that the said elongate electrode is one of a row of elongate electrodes aligned one after another in the said direction, and crossed by respective such arrays of opposing transparent electrode portions, respective first electrode portions of the said arrays being connected to one of a set of energisation terminals of the device, respective second electrode portions of the said arrays being connected to a second energisation terminal of the said set, and so on so that any selected electroluminescence element of the device can be energised individually by application of such a pulse between one of the said energisation terminals and one of the said elongate electrodes.

Reference will now be made, by way of example, to the accompanying drawings, in which:

Fig. 1 shows a partial sectional view of an electrophotographic printer;

Fig. 2 shows an electrode arrangement of a prior art EL panel;

Fig. 3 shows prior art control circuitry;

Fig. 4 is a graph illustrating the intensity of light emitted by the EL device;

Fig. 5 shows a sectional view of an EL device for use in a printer embodying the present invention;

Fig. 6 shows a perspective view of an electrode arrangement of the EL device of Fig. 5;

Fig. 7 shows a plan view of the electrode arrangement shown in Fig. 6;

Fig. 8 is a circuit diagram of control circuitry for controlling the EL device shown in Figs. 5 to 7;

Figs. 9a to 9d are graphs of respective waveforms in the EL device of Figs. 5 to 7;

Figs. 10a to 10k are graphs of respective waveforms in the EL device and the control circuitry of Figs. 5 to 8;

Fig. 11 shows a plan view of another electrode arrangement of an EL device for use in a printer embodying the present invention;

Fig. 12 shows a sectional view of the EL device in Fig. 11;

Fig. 13 shows a perspective view of the EL device in Fig. 12;

Fig. 14 is a circuit diagram of control circuitry for controlling the EL device shown in Figs. 11 to 13;

Figs. 15a to 15c show respective plan views of a modification of the electrode arrangement in Fig. 11;

Fig. 16 shows a sectional view of another EL device for use in a printer embodying the present invention;

Fig. 17 shows a partial plan view of the EL device in Fig. 16;

Fig. 18 is a graph representing the change in the light intensity caused by deviation between an optical axis of the focusing lens and the direction of light emitted from the EL element in the EL device;

Fig. 19 is a circuit diagram of control circuitry for controlling the EL device in Fig. 16;

Figs. 20a to 20d show respective views illustrating the operation of the EL device in Fig. 16 and the control circuitry in Fig. 19;

Fig. 21 shows a plan view of a modification of the electrode arrangement of Fig. 17; and

Fig. 22 shows a partial sectional view of an electrophotographic printer embodying the invention and using a modified EL device.

Before describing preferred embodiments of the present invention, a description will be given of an electrophotographic printer and a prior art EL device presently used in such a printer.

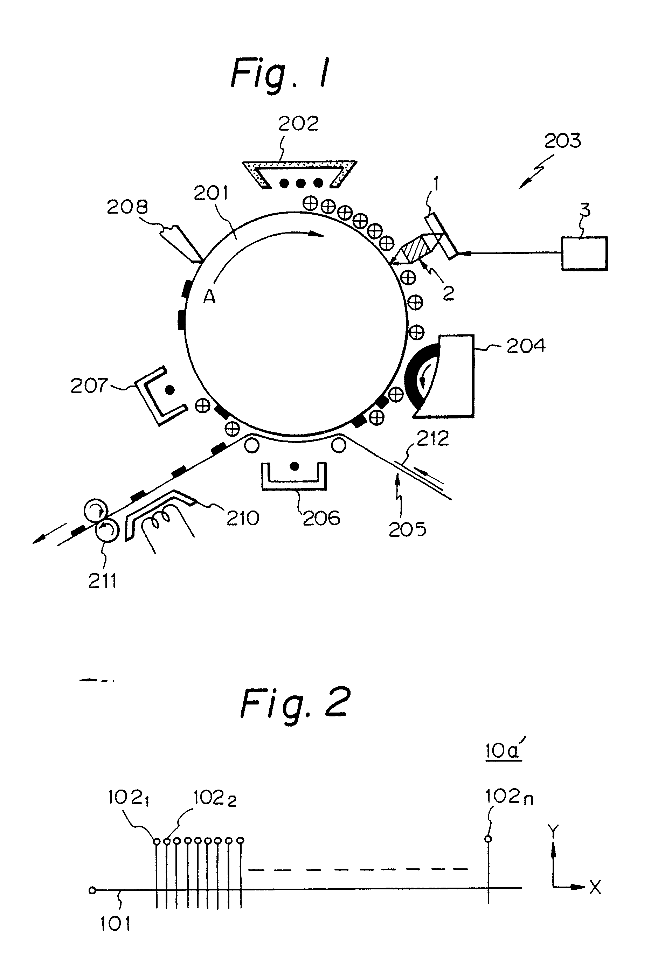

Referring to Fig. 1, an electrophotographic printer includes a light sensitive drum 201 coated with a light sensitive layer, a precharger 202 for electrically charging the light sensitive layer, an optical unit 203, an image developing device 204, a paper delivery unit 205 by which paper is delivered, an image transfer device 206, a discharger 207, a cleaner 208, a thermal-type image fixing device 210, and a pair of delivery rollers 211.

The light sensitive drum 201 rotates in the direction shown by the arrow A in Fig. 1. The light sensitive layer on the drum 201 is charged to a predetermined high voltage on the basis of the principle of corona electrical discharge by the precharger 202. Due to this charge, the light sensitive layer exhibits a high resistance. The optical unit 203 emits light beams modulated in response to data to be printed. Portions of the light sensitive layer irradiated by the beams are thereby brought to a low resistance and low voltage state. Toner in the image developing device 204 is deposited on the voltage-reduced portions of the light sensitive layer. This is the principle of an electrostatic latent image formation.

A sheet of paper 212 is delivered by the paper delivery unit 205 above the image transfer device 206, and the charged toner on the light sensitive layer on the drum 201 is transferred to the paper 212 by applying an opposite polarity voltage from the image transfer device 206. The paper 212,having the toner thereon,is detached from the drum 201 by a paper separator (not shown), and is delivered to the image fixing device 210, which fixes the toner image on the paper. After the paper 212 is detached from the drum 201, images on the light sensitive layer are electrically erased by the discharger 207. Any toner remaining on the light sensitive layer is removed by the cleaner 208. This is the principle of a basic print operation as carried out by an electrophotographic printer.

In Fig. 1, the optical unit 203 includes an EL panel 1, a control circuit 3, and a light focusing lens unit 2. The use of an EL panel as a light source in an electrophotographic printer is disclosed in JPP 59-214672, as mentioned above. Figure 2 is a view illustrating an electrode arrangement 10a' of the EL panel used in a prior art electrophotographic printer. The EL panel consists of an elongate X direction rear-electrode 101 and an array of opposing electrode portions comprising a plurality of Y direction transparent electrodes $102_1$ to $102_n$ provided opposite thereto at a predetermined distance and perpendicular to the X direction electrode 101. A light emitting layer is formed between the X and Y direction electrodes 101 and $102_1$ to $102_n$. Each electro-luminescence (EL) element (cell) is defined by those portions of the light-emitting layer which are sandwiched between the X direction electrode 101 and the Y direction electrode. Such an EL panel, for use in an electrophotographic printer, requires a large number of EL elements, for example 1024, 2048 or more, and thus such an EL panel must have a large number of Y direction electrodes.

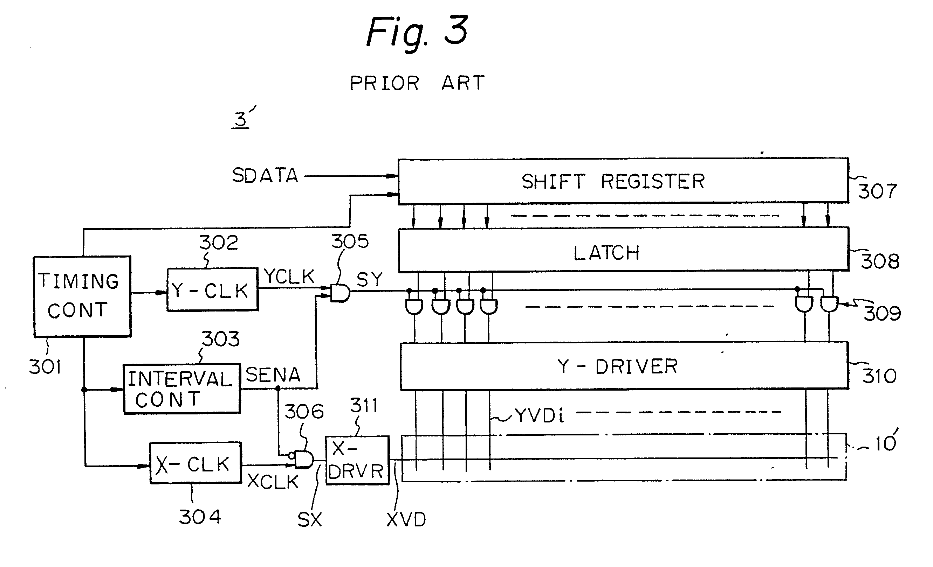

Referring to Fig. 3, a prior art control circuit 3', for controlling the prior art EL panel having the electrodes arrangement shown in Fig. 2, consists of a timing controller 301, a clock generator 302 for energizing the y direction electrodes, an interval controller 303, a clock generator 304 for energizing the X direction electrode, an AND gate 305, an AND gate 306 having an inverted input, a shift register circuit 307, a latch circuit 308 including flip-flops holding serial data SDATA therein, an AND gate row 309, a Y direction electrode driver 310, and an X direction electrode driver 311.

If the number of Y direction electrodes is 2048, a corresponding number of shift registers, flip-flops, AND gates, and IC driver gates, must be provided. The IC driver gates are generally expensive, because they must carry a high voltage, for example, 200V DC, supplied to the electrodes directly therethrough. Accordingly, such a control circuit suffers from the disadvantages of a large size circuit construction and a high manufacturing cost.

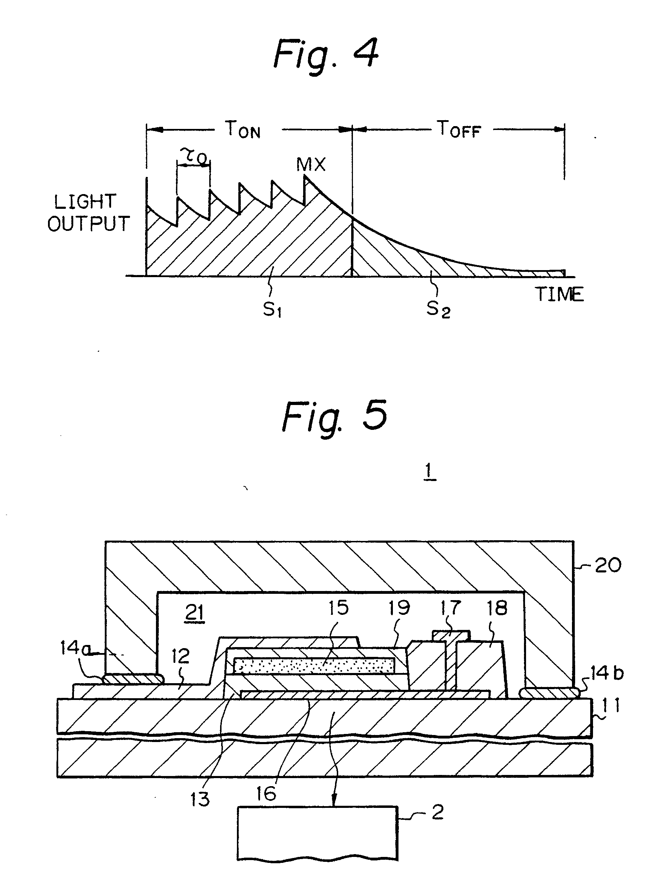

Figure 4 is a graph representing a basic light emitting operation of an EL panel used in an electrophotographic printer. The EL element emits light only when its corresponding intersecting X and Y direction electrodes are supplied with predetermined AC pulse voltages, and the emitted light reduces rapidly with the elapse of time. The intensity of a single light pulse emitted by the elements of the EL panel is not sufficient to form a latent image on the light sensitive layer, and, accordingly, a plurality of consecutive light emitting operations must be carried out in a predetermined light exposure time $T_{ON}$. This requires a high speed operation of the control circuit.

At the same time, a predetermined OFF time, $T_{OFF}$, must be maintained to ensure that the forming of the latent image in the next printing operation is not affected by the previous operation.

Now, preferred embodiments of the present invention will be described.

Referring to Fig. 5, an EL device 1 includes a glass substrate 11, a transparent electrode 16 of $In_2O_3$ doped with Sn, namely ITO, having a thickness of approximately 200 nm ($200 \times 10^{-9}$m), a first insulating layer 13 of $Si_3N_4$, having a thickness of approximately 200 nm; a light emitting layer 15 of ZnS doped with 0.5% Mn, having a thickness of approximately 600 nm; a second insulating layer 19 of $Si_3N_4$, having a thickness of approximately 200 nm; and a rear-electrode 12 of Al, having a thickness of approximately 300 nm. The EL device 1 also includes a bus-bar electrode 17 of Al, a cross-over insulator 18, and a protection cover 20 fixed on the glass substrate 11 by adhesive materials 14a and 14b and hermetic-sealing the above elements together with the glass substrate 11. A cavity 21 defined by the protection cover 20 and the glass substrate 11 is filled with a protective gas.

When a predetermined AC pulse voltage is applied between the transparent electrode 16 and the rear-electrode 12, the light emitting layer 15 emits light in two directions. Light directed to the rear-electrode 15 is reflected at the non-transparent Al rear-electrode 15. Light directed to the transparent-electrode 16 passes through the transparent-electrode 16 and the transparent glass substrate 11, and is introduced into the light focusing lens unit 2. The light focusing lens unit 2 includes a lens array consisting of a plurality of focusing lens. The light focus lens unit 2 receives the incident rays, and makes a normal (non-reversed) and equal size image at a focus thereof. The focus may be placed at the light sensitive layer on the light sensitive drum.

The EL elements array, and thus the focus lens array, extend along an axial line on the circumferential plane of the light sensitive drum to simultaneously expose a plurality of focused rays on the light sensitive layer.

The formation of the EL device shown in Fig. 5 is as follows:

a. A transparent and electrically conductive layer of ITO is formed on the glass substrate 11. The patterning and etching of the transparent and conductive layer is carried out under predetermined conditions to form the desired transparent electrode 16, of a predetermined shape and pitch, so as ultimately to produce the required number of EL elements.

b. Subsequently, the insulating layer 13 of $Si_3N_4$, the light emitting layer 15 of ZnS with 0.5% Mn, and the insulating layer 19 of $Si_3N_4$ are formed. Then, the cross-over insulating layer 18 is formed. By etching the cross-over insulating layer 18, a throughhole is formed at a certain position on the transparent electrode 16.

c. A metal layer of Al is deposited on the insulating layer 19 is patterned and etched to form the rear electrode 12. Al is also inserted into the throughhole in the insulating layer 18, and a portion extending on the top of the insulating layer 18 is patterned to form the bus-bar electrode 17.

d. The protective cover 20 is fixedly mounted on the glass substrate 11 by the adhesive materials 14a and 14b, and the cavity 21 is filled with a protective gas, to hermetically seal the glass substrate 11 with the protective cover 20.

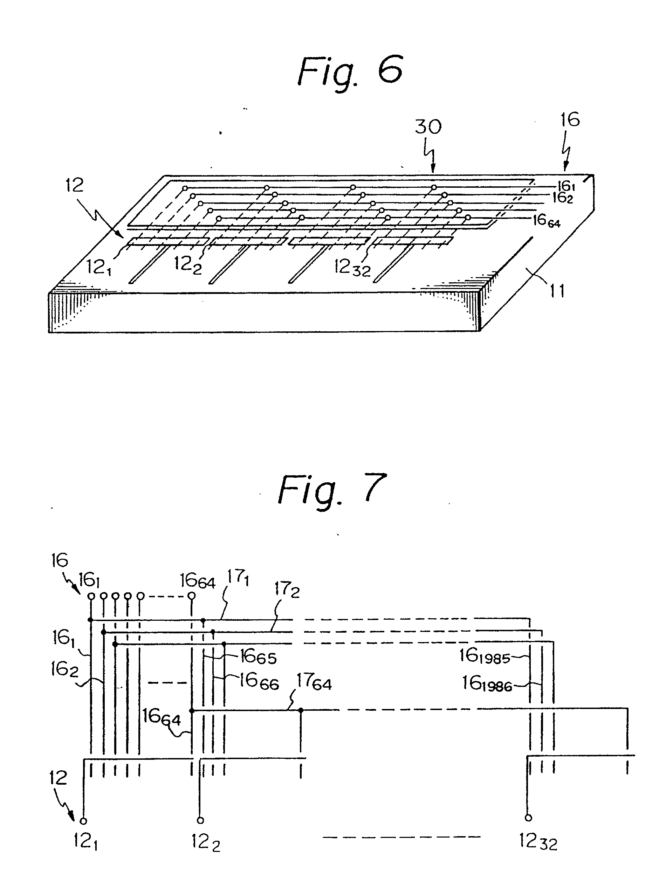

Figure 6 is a perspective view of an electrode arrangement of the EL device shown in Fig. 5. Figure 7 is a schematic view of the electrode arrangement shown in Fig. 6. In this embodiment, in order to energize a row formed of 2048 EL elements, 2048 transparent electrodes (opposing electrode portions) 16 are provided. These electrodes 16 are divided into 32 arrays or groups, each including 64 electrodes: $16_1$ to $16_{64}$, $16_{65}$ to $16_{128}$, ... , $16_{1985}$ to $16_{2048}$. Also provided are one row of elongate rear electrodes 12, divided into 32 groups $12_1$ to $12_{32}$. The first transparent electrodes $16_1$, $16_{65}$, ... , $16_{1985}$ in each group are

EP 0 225 693 B1

commonly connected via a first bus-bar electrode or energising terminal $17_1$. The second transparent electrodes $16_2$, $16_{66}$, ... , $16_{1986}$ in each group are also commonly connected via a second bus-bar electrode or energising terminal $17_2$, and so on.

The above electrode arrangement has 32 groups of direct drive transparent-electrodes, each containing 64 electrodes, and 32 direct drive rear-electrodes, and thus provides 64 x 32 = 2048 EL elements by combining the same. In other words, by energizing at most only 96 drive electrodes (that is any of the 32 rear-electrodes plus any of the 64 transparent electrodes of one group) any of the 2048 EL elements can be energised.

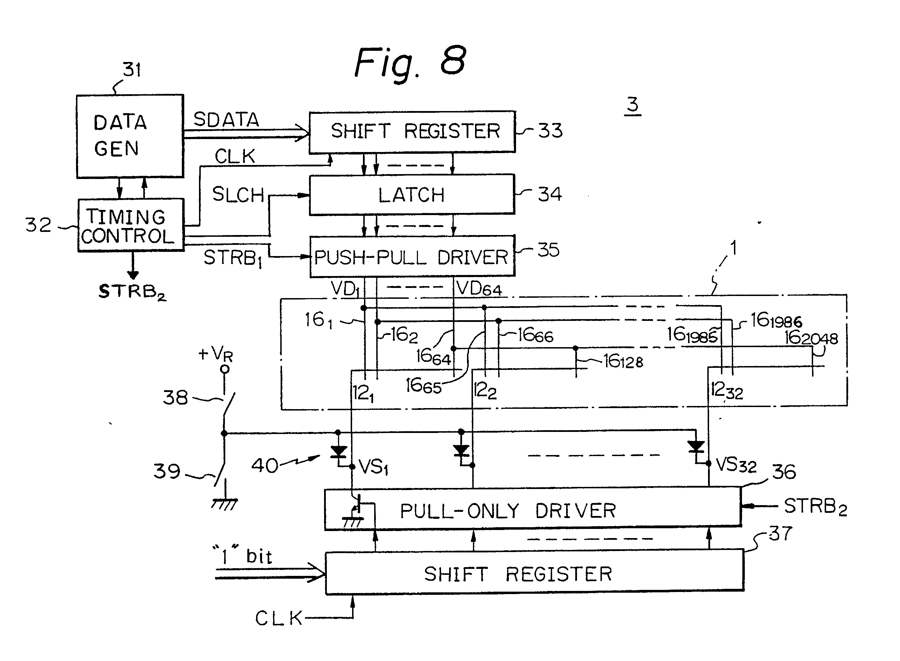

Figure 8 is a circuit diagram of a control circuit 3 of the embodiment, for controlling and driving the EL device 1 shown in Figs. 5 to 7. The control circuit 3 includes a circuit 31 which generates 2048 bits of serial data SDATA to be displayed on the EL device 1, a timing controller 32, first shift register circuitry 33 comprising 64 shift registers, latch circuitry 34 comprising 64 flip-flops, and push-pull driver circuitry 35 including 64 IC driver gates having a high-voltage resistance. The control circuit 3 also includes pull-only driver circuitry 36 including 32 IC driver gates having a high-voltage resistance, second shift register circuitry 37 comprising 32 shift registers, switching elements 38 and 39, and a diode array 40 comprising 32 diodes for making light emission circuits and presenting short circuits between the IC driver gates in the pull-only driver circuitry 36.

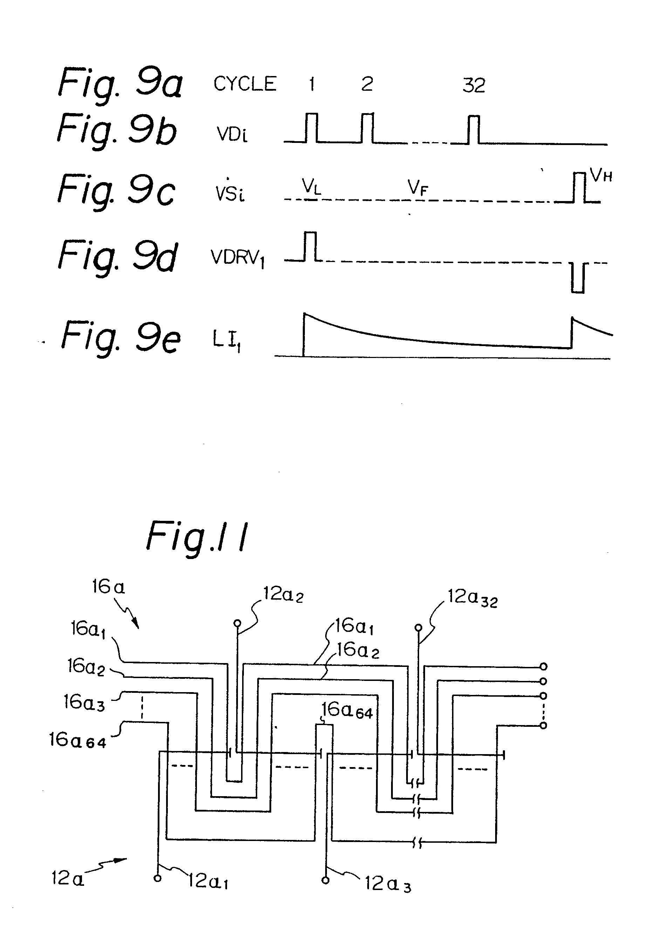

In a first scanning cycle, the data generating circuit 31 supplies a first set of serial output data SDATA, comprising first to 64-th bits, to the first shift register circuitry 33. The timing controller 32 supplies a clock pulse CLK to the first shift register circuitry 33 to shift-input the serial output data SDATA of 64 bits therein. The timing controller 32 also outputs a latching pulse SLCH to the latch circuitry 34, to bring about storage of the 64 bits in the latch circuitry 34. In the first scanning cycle, a first shift register of the second shift register circuitry 37 is set to one, energizing a first IC driver gate in the pull-only driver circuitry 36. When a bit of the data SDATA is 1, an EL element $EL_i$ emits light. To emit light from a first EL element, an AC driving voltage $VDRV_1$ , as shown in Fig. 9d, must be supplied between the transparent electrode and the rear-electrode. The voltage-$VDRV_1$ is defined by the equation: $VDRV_1 = VD_1 - VS_1$ , where $VD_1$ represents a drive voltage supplied to a first transparent electrode and $VS_1$ a drive voltage, consisting of a low voltage $V_L$ , a floating voltage $V_F$ and a high voltage $V_H$, supplied to a first rear-electrode. In order to supply these drive voltages $VD_1$ and $VS_1$ , as shown in Figs. 9b and 9c, the timing controller sends strobe pulses $STRB_1$ and $STRB_2$ to the push-pull driver circuitry 35 and the pull-only driver circuitry 36 respectively. Upon application thereto of the AC drive voltage $VDRV_1$ , the EL element $EL_1$ - is instantaneously lit and the light intensity $LI_1$ decreases at once as shown in Fig. 9e. On the other hand, when a bit of the data SDATA is 0, the AC drive voltage $VDRV_i$ is not supplied to the corresponding EL element, and accordingly, that EL element does not emit light. This operational principle may be applied to 64 bit data stored in the latch circuit 34.

In a second scanning cycle, the data generating circuit 31 outputs a second set of serial output data SDATA, comprising 65-th to 128-th bits. The data SDATA are shifted in the first shift register circuitry 33 in response to the clock pulses CLK. The timing controller 32 sends a single clock pulse CLK to the second shift register circuitry 37, shifting one bit of the data stored in the second shift register circuitry 37. The timing controller 32 supplies the latching signal SLCH to the latch circuitry 34, to bring about the latching of the 65-th to 128-th bits of the data SDATA into the latch circuitry 34, and so on. In this way, light is emitted by those EL elements corresponding to the second group of data, that is the 65-th to 128-th bits. These operations are consecutively effected to illuminate the data of 2048 bits on the EL device 1.

In the above-described basic operation for illuminating 2048 EL elements, the push-pull driver circuitry 35 and the pull-only driver circuitry 36 drive 64 electrodes in one drive (or scan) cycle, and the drive operation is repeated 32 times. Although this can require a longer time than the drive time in the prior art, the number of IC driver gates, which are very costly, is reduced to 96 (= 64 + 32) in this embodiment, and this greatly contributes to a reduction of the manufacturing cost.

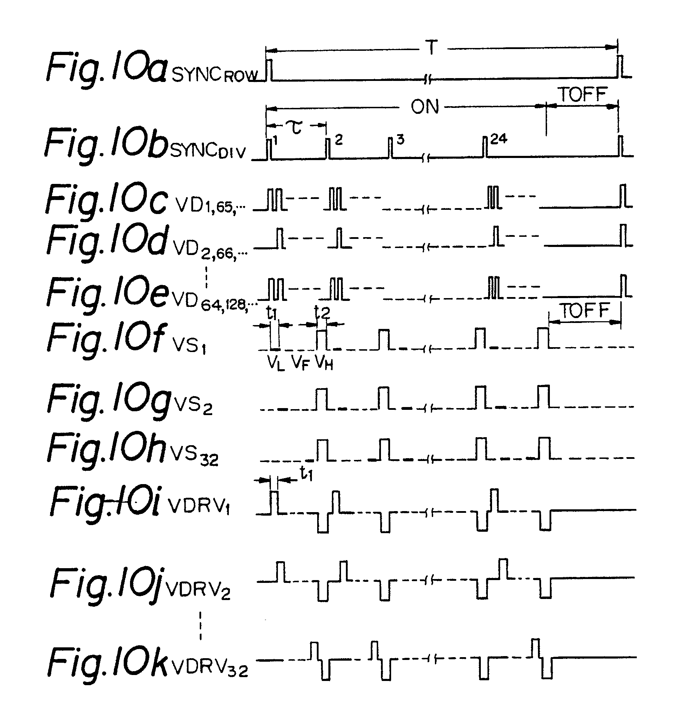

Next, the operation of the EL device 1 and the control circuit 3 used in the electrophotographic printer will be described with reference to Figs. 10a to 10k.

A single pulse of light emitted by an EL element, resulting from application of a single AC drive voltage signal, is insufficient to form fully a dot of latent image on the light sensitive medium of the light sensitive drum. Accordingly, consecutive emission by a plurality of EL elements is required, as shown in Fig. 4, to achieve a maximum light intensity MX and to accumulate a light energy $S_1$. Obviously the duration time $\tau_0$ - (Fig. 4) should be short so as to increase the maximum light intensity. An ON time $T_{ON}$ is defined by the duration time $\tau_0$ and the repetition number of the emission. At the same time, a predetermined length of an OFF time $T_{OFF}$ , which is a decay time, is required so as to decrease the light intensity to a certain level which does not affect the printing of a paper next in line. Generally, a light energy $S_2$ accumulating the

6

remaining and decreasing light during the OFF time $T_{OFF}$ is defined by the following formula:

$$S_2 = \int_0^{T_{OFF}} MX \cdot e^{-t/\tau_0} \cdot dt \qquad \qquad \ldots (1)$$

In addition, a contrast C is defined by the following formula:

$$C = \frac{S_2}{S_1} \qquad \qquad \ldots (2)$$

Preferably, the contrast C is
Supposing

$$C \lesssim 0.1 \qquad \qquad \ldots (3)$$

that the light sensitive medium is A4 size, approximately 29.7 mm $\times$ 21.1 mm, and two sheets are printed in a time of one minute, when the light emitting layer 15 in the EL device 1 is made of ZnS doped with 0.5 wt.% Mn and the light sensitive medium is of $As_2Se_3$, the parameters shown in Figs. 10a to 10k are as follows:

(a) interval time T for row synchronization signal $SYNC_{ROW}$: 8.8 ms

(b) duration time $\tau$ of scan division synchronization signal $SYNC_{DIV}$ for scanning 32 times in one frame: 340 $\mu$s

(c) ON time $T_{ON}$: 8.16 ms

(d) number of scanning repeats: 24

(e) OFF time $T_{OFF}$: 640 $\mu$s

(f) accumulated light energy during the ON time, $S_1$: approximately 1 $\mu$J/cm$^2$

(g) contrast: approximately 0.09

(h) amplitude of AC drive voltage: +200V DC and -200V DC

Whether the pulse voltages $VD_1$ through $VD_{64}$ are at a high level of +200V DC or a low level of 0V DC is defined by ones or zeros of a first 64 bits: a first, a second, ..., 64-th bits stored in the latch circuit 34. The pulse voltages $VD_1$ to $VD_{64}$ are supplied to the transparent electrodes $16_1$ through $16_{64}$. One of the rear-electrode $12_1$ through $12_{32}$ is also supplied with a pulse voltage VS. Each pulse voltage VS for energizing a corresponding EL element consists of a low level voltage $V_L$ of 0V DC, a floating level voltage $V_F$, and a high level voltage $V_H$ of +200V DC. The low level voltage $V_L$ is generated when the switching elements 38 and 39 are turned OFF and the IC driver gate in the pull-only driver circuit 36 is turned ON, so that a reference voltage $V_R$ of +200V DC is not transmitted to a common connected point of the switching elements 38 and 39, and the common connected point is grounded through the diode in the diode array 40 and the IC driver gate in the pull-only driver circuit 36. The high level voltage $V_H$ is generated when the switching element 38 is turned ON, the switching element 39 is turned OFF, and the IC driver gate in the pull-only driver circuit 36 is turned OFF, so that the reference voltage $V_R$ is supplied to the rear-electrode through the switching element 38 and the diode. The floating level voltage $V_F$ is defined by a voltage occurring when the switching elements 38 and 39 are turned OFF and the IC driver gate in the pull-only driver circuit 36 is also turned OFF. A duration time $T_1$ of the low level voltage $V_L$ is 10 $\mu$s, and a duration time $t_2$ of the high level voltage $V_H$ is 20 $\mu$s.

The timing controller 32 controls the output of the above voltages $VD_1$ to $VD_{64}$ and $VS_1$ to $VS_{32}$.

When at least one of the high level voltages of $VD_1$ to $VD_{64}$ is supplied to at least one of the transparent electrodes $16_1$ to $16_{64}$, and one of the low level voltages $V_L$ of the pulse voltage $VS_1$ is supplied to the rear-electrode $12_1$, the EL elements associated with that rear electrode $12_1$ are supplied with respective high level drive voltages $VDRV_1$ to $VDRV_{64}$ of +200V DC, thereby instantaneously energizing those EL elements so as to cause light to be emitted therefrom. At an end of a first scanning period, of duration $\tau$ which is 1/24th of the ON time $T_{ON}$, a low level voltage is supplied to the transparent

electrodes $16_1$ to $16_{64}$ and a high level voltage $V_H$ of $+200V$ DC is simultaneously supplied to the rear-electrodes $12_1$ to $12_{32}$ , with the result that drive voltages $VDRV_1$ to $VDRV_{32}$ of -200V DC are supplied to all of the EL elements.

During the ON time $T_{ON}$ , a series of 24 consecutive illumination operations is carried out thereby to effect the latent image formation.

Then, during the OFF time $T_{OFF}$ , the transparent electrodes $16_1$ to $16_{64}$ and the rear-electrodes $12_1$ to $12_{32}$ are supplied with a low voltage, and thus all of the EL elements are deenergized to a light level which does not affect a next line image formation.

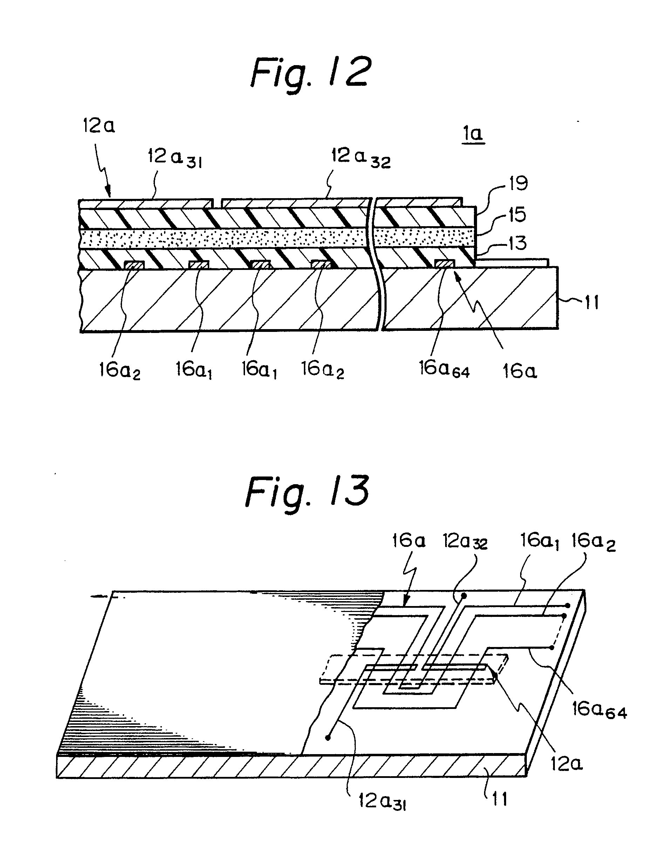

Another EL device for use in an embodiment of the present invention will now be described with reference to Figs. 11 to 13.

In Figs. 11 to 13, an EL device 1a includes a glass substrate 11, a transparent electrode 16a, a first insulating layer 13, a light emitting layer 15, a second insulating layer 19, and a rear electrode 12a. The protective cover 20 shown in Fig. 5 may be provided, if desired.

The rear-electrode 12a is divided into 32 sub-rear electrodes $12a_1$ to $12a_{32}$ as shown in Figs. 12 and 13. The transparent electrode 16a includes 64 subtransparent electrodes $16a_1$ to $16a_{64}$. The subtransparent electrodes $16a_1$ to $16a_{64}$ are respective single conductive paths formed by interconnecting in series the first transparent electrodes $16_1$, $16_{65}$, ..., $16_{1985}$ in each group, the second transparent electrodes $16_2$, $16_{66}$, ..., $16_{1986}$ in each group, and so on. The sub-transparent electrodes $16a_1$ to $16a_{64}$ are formed in a meander (zigzag) line and intersect each sub-rear electrode. That is, each sub-transparent electrode $16a_1$ to $16a_{64}$ passes to and fro across the row of subrear electrodes in a regularly repeated manner. The light emitting layer 15 is formed between the sub-rear electrodes $12a_1$ to $12a_{32}$ and the sub-transparent electrodes $16a_1$ to $16a_{64}$, thereby to define 2048 EL elements.

According to the above electrode arrangement, the cross-over electrodes 17 and the throughholes therefor. as shown in Figs. 5 and 6, are not necessary. As a result, the manufacturing process is simplified and the yield of the EL device is improved in comparison to those of the EL device shown in Figs. 5 to 7.

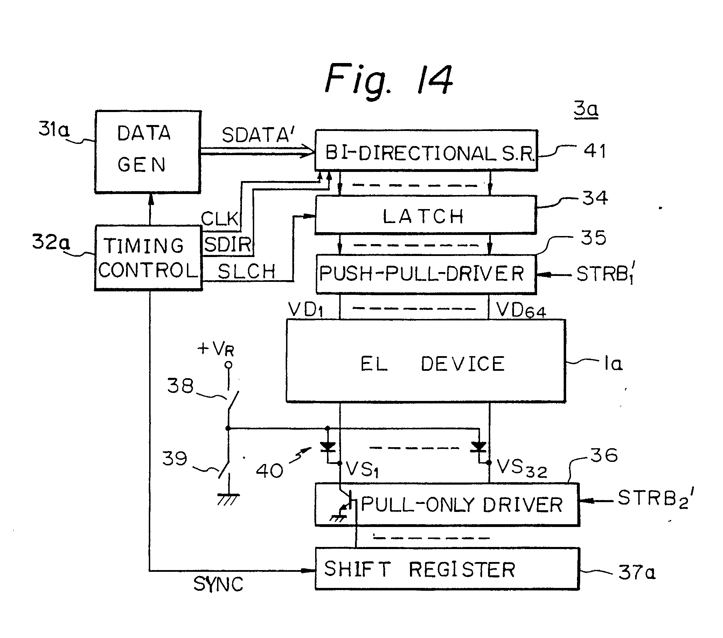

The Figure 14 is a circuit diagram of a control circuit 3a controlling and driving the EL device 1a shown in Figs. 11 to 13.

Referring to Fig. 11, the sub-transparent electrode $16a_1$ is intersected at a right end under the sub-rear electrode $12a_1$ , at a left end under the sub-rear electrode $12a_2$ , and so on. That is, the sub-transparent electrodes $16a_1$ to $16a_{64}$ are alternatively placed under the respective sub-rear electrodes $12a_1$ to $12a_{32}$. Accordingly, the sequence of a set of 64 bits data must be reversed, as follows:

### Table 1

| Sub-rear electrode selection | Sequence of 64 bit data |
|---|---|
| $12a_1$ | 64, 63, ......., 2, 1 |
| $12a_2$ | 65, 66, ......., 127, 128 |
| . | |
| . | |
| $12a_{31}$ | 1984, 1983, ..., 1920, 1919 |
| $12a_{32}$ | 1985, 1986, ..., 2047, 2048 |

The control circuit 3a differs from the control circuit 3 shown in Fig. 8, in that the control circuit 3a includes a data generator 31a, a bi-directional shift register circuit 41, a timing controlling 32a, and a shift register circuit 37a. Other circuit elements bearing the same references as in Fig. 8 are substantially identical to those shown in Fig. 8.

The data generator 31a outputs sets of 64 bit data, i.e., 1 to 64 bits, 65 to 128 bits, ..., 1984 to 2048 bits, to the bi-directional shift register circuit 41. The bi-directional shift register circuit 41 includes 64 shift registers and has a bi-directional shift feature, well known in this field. When a shift direction signal SDIR, applied thereto by the timing controller 32a, is a logical high level, the bi-directional shift register circuitry 41 inputs the set of 64 bit data and shifts the same in a forward direction, otherwise the bi-directional shift register circuit 41 shifts the same in a reverse direction. The timing controller 32a outputs a low level shift direction signal SDIR when odd sub-rear electrodes $12a_1$ , $12a_3$ , ..., $12a_{31}$ are selected, but otherwise

EP 0 225 693 B1

outputs a high level SDIR. The further shift register circuitry 37a includes 32 shift registers, and the timing controller 32a sets "1" to a first shift register at an initial condition of each scanning cycle.

In a first scanning cycle, the 64th to 1st bits are latched in the latch circuitry 34 and 64 IC driver gates are energized in the push-pull driver circuitry 35. At the same time, a first IC driver gate in the pull-only driver circuitry 36 is energized. As a result, the subtransparent electrodes $16a_1$ to $16a_{64}$ and the sub-rear electrode $12a_1$ are energized to illuminate the 64th to 1st EL elements. The principle of emission is basically the same as that in Fig. 8. In a second scanning cycle, the sub-transparent electrodes $16a_1$ to $16a_{64}$ for the 65th to 128th bit data and the sub-rear electrode $12a_2$ are energized, and subsequently other sets of 64 bit data are selected to bring about emission of light from corresponding EL elements.

The above bi-directional shift operation can be realized by a variety of methods. For example the data generator 31a can output sets of 64 bit-data as shown in Table 1.

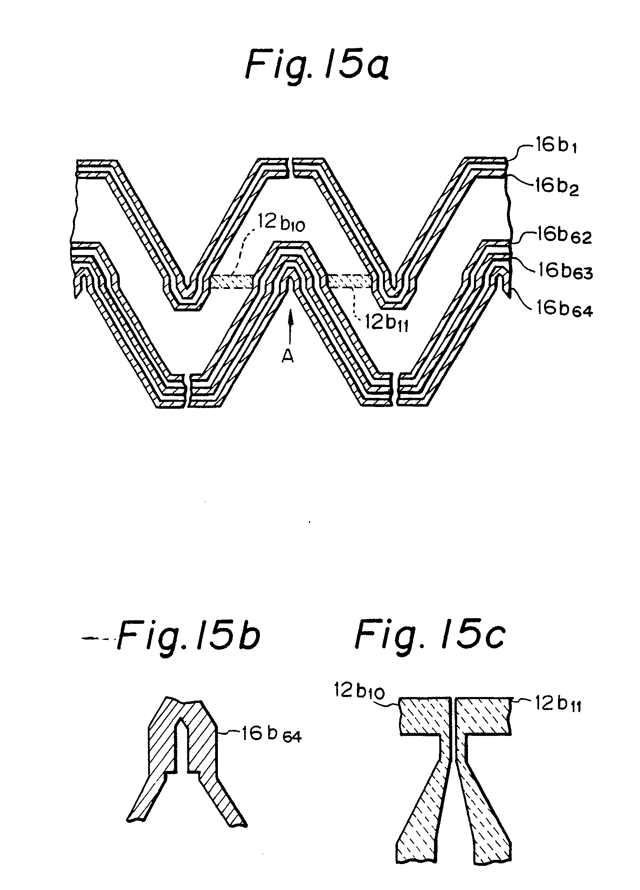

Referring to Figs. 15a to 15c, a modified electrode arrangement of the EL device shown in Figs. 11 to 13 will be described. Sub-transparent electrodes $16b_1$ to $16b_{64}$ are formed in a trapezoidal or triangular zigzag belt, as shown in Fig. 15a. That is, each of the subtransparent electrodes $16b_1$ to $16b_{64}$ includes, between successive points at which that electrode crosses the row of sub-rear electrodes $12b_1$ to $12b_{32}$, a section which extends parallel to the said row and is shorter than the distance between those successive points. Respective partial enlarged plan views of the sub-transparent electrode $16b_{64}$ and sub-rear electrodes $12b_{10}$ and $12b_{11}$ at a point A in Fig. 15a. This modified sub-transparent electrode arrangement has the merit of a short electrode length which contributes to a reduction of the power loss caused by resistance, in comparison to the subtransparent electrode arrangement shown in Fig. 11.

From the viewpoint of shortening the length of the sub-transparent electrodes, a half-circle zigzag form is preferable.

Another EL device and control circuitry therefor for use in an electrophotographic printer embodying the present invention will now be described.

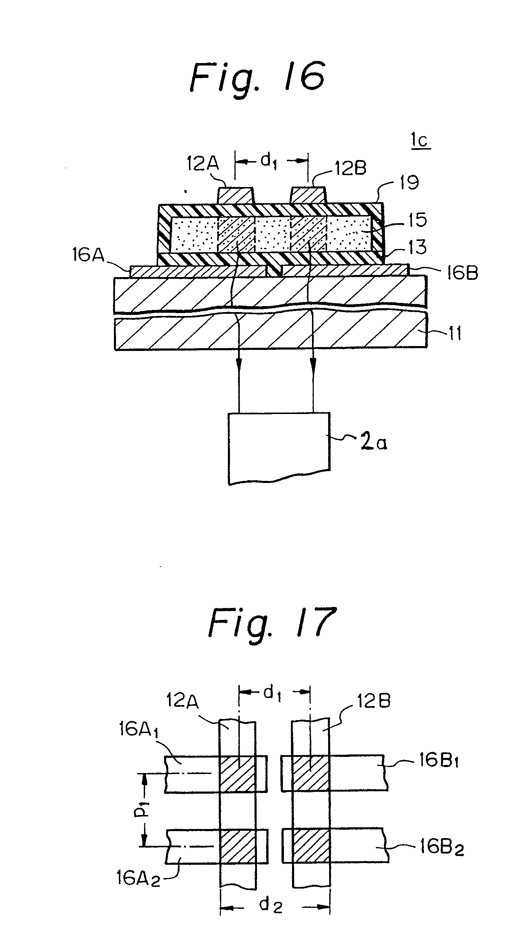

Referring to Fig. 16, an EL device 1c includes a pair of EL element rows; one row consisting of an ITO transparent electrode 16A, of $In_2O_3$ doped with Sn, an insulating layer 13 of $Si_3N_4$, a light emitting layer 15 of ZnS with 0.5% wt. Mn, another insulating layer 19 of $Si_3N_4$, and a first rear-electrode 12A of Al, and the other row consisting of a second transparent electrode 16B, the insulating layer 13, the light emitting layer 15, the insulating layer 19, and a second rear-electrode 12B. These EL element rows are formed on a glass substrate 11. Each transparent electrode 16A or 16B consists of 2048 sub-transparent electrodes.

Both EL element rows have the same structure and face, center-to-center, the rear-electrodes 12A and 12B at a distance $d_1$. Each element row may be formed in any one of the electrode arrangements set forth above.

Referring to Fig. 17, a partial plan view of the electrode arrangement of Figs. 6 and 7 is represented. If a resolution of the print is 10 dots/mm, a pitch $P_1$ between the transparent electrodes $16A_1$ and $16A_2$ or $16B_1$ and $16B_2$ is 0.1 mm and the distance $d_1$ of the rear-electrodes 12A and 12B from center-to-center is also 0.1 mm.

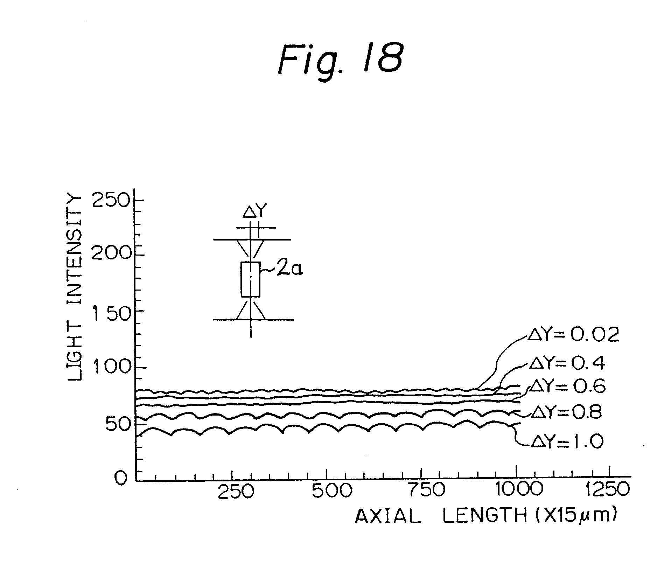

A focus lens array 2a includes a plurality of lenses. According to experiments, a deviation $\Delta Y$ between the center portion of the EL element and the optical axis of the focus lens should be smaller than 0.4 mm, as shown in Fig. 18. In Fig. 18, the abscissa indicates a length in an axial direction of the light sensitive drum and the ordinate indicates light intensity.

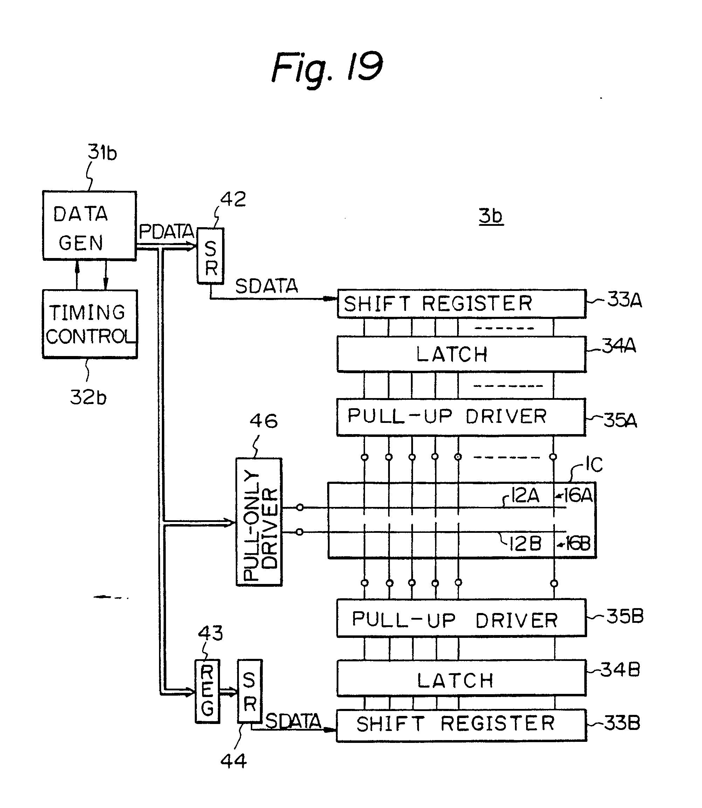

Referring to Fig. 19, a control circuit 3b includes a data generator 31b for outputting parallel data PDATA, a timing controller 32b, shift register circuitry 42 comprising 64 shift registers, first shift register circuitry 33A comprising 64 shift registers, first latch circuitry 34A comprising 64 flip-flops, first pull-up driver circuitry 35A comprising 64 IC driving gates, and pull-only driver circuitry 46 having two rows of IC drivers, each row consisting of 32 IC driver gates. The control circuit 3b also includes register circuitry 43 comprising 64 registers, shift register circuitry 44 comprising 64 shift registers, second shift register circuitry 33B comprising 64 shift registers, second latch circuitry 34B comprising 64 flip-flops, and second pull-up driver circuitry 35B comprising 64 IC driver gates. The circuit construction of a first circuit of the first shift register circuitry 33A, the first latch circuitry 34A and the first pull-up driver circuitry 35A is substantially identical to that of a second circuit of the second shift register circuitry 33B, the second latch circuitry 34B, and the second pull-up driver circuitry 35B.

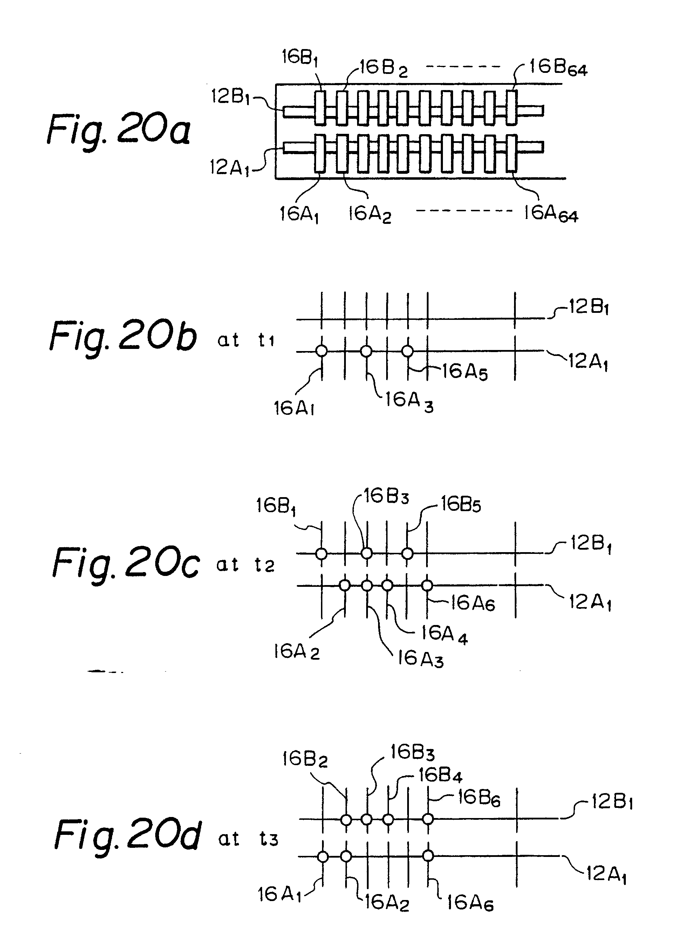

The operation of the EL device 1c shown in Figs. 16 and 17 by the control circuit 3b shown in Fig. 19 will be described with reference to Figs. 20a to 20d.

Figure 20a represents two sets of the electrode arrangements, one set consisting of the rear-electrode $12A_1$ and a group of transparent electrodes $16A_1$ to $16A_{64}$, and the other set consisting of the rear-electrode $12B_1$ and a group of transparent electrodes $16B_1$ to $16B_{64}$. Figures 20b to 20d are views illustrating the illumination of the EL elements at times $t_1$ to $t_3$ respectively. In Figs. 20b to 20d, small

9

circles represent emitting EL elements.

In order to simply describe the operation, the operation for illuminating 64 dots on one line will be described. The data generator 31b sends first parallel data PDATA of 64 bits to the shift register circuit 42 and the register circuit 43. The parallel data PDATA held in the shift register circuit 42 is converted into serial data SDATA, and is consecutively shifted into the shift register circuits 33A. After that, the second parallel data PDATA to be printed on a next line of the light sensitive medium is held in the shift register circuit 42. Simultaneously, the first parallel data PDATA stored in the register circuit 43 is transferred to the shift register circuit 44. Then, the second parallel data PDATA is stored in the register circuit 43. At the same time, the data stored in the shift register circuit 44 is converted into serial data SDATA, and transferred to the shift register circuit 33B. As can be seen from the above description, the first shift register circuit 33A receives the data one cycle before the second shift register circuit 33B.

At a time $t_1$, the first data held in the shift register circuit 33A is latched at the latch circuit 34A. The transparent electrodes $16A_1$, $16A_3$ and $16A_5$ are energized through the pull-up driver circuit 35A in response to the latched data. At the same time, the rear-electrode $12A_1$ is energized through the pull-only driver circuit 46. The EL elements on the rear-electrode $12A_1$ emit light as shown in Fig. 20b. However, the EL elements on the rear-electrode $12B_1$ do not emit light at the time $t_1$ because the shift register circuit 33B and the latch circuit 34B have been cleared. At a time $t_2$, after the elapse of one cycle, the second data is transferred to the first shift register circuit 33A and latched at the first latch circuit 34A. Simultaneously, the first data is transferred to the second shift register circuit 33B and latched at the second latch circuit 34B. As a result, as shown in Fig. 20c, the transparent electrodes $1A_2$, $16A_3$, $16A_4$ and $16A_6$ and the rear-electrode $12A_1$, and the transparent electrodes $16B_1$, $16B_2$, and $16B_5$ and the rear-electrode $12B_1$ are respectively energized, simultaneously. The light sensitive medium on the light sensitive drum is rotated and advanced one dot line for one cycle between the times $t_1$ and $t_2$. Accordingly, the same dots on one dot line are exposed twice by the EL elements on the transparent electrodes $16A_1$, $16A_3$ and $16A_5$ and the rear-electrode $12A_1$ and the next EL elements on the transparent electrodes $16B_1$, $16B_3$ and $16B_5$ and the rear-electrode $12B_1$. The above operation is carried out at a time $t_3$.

By providing two rows of EL elements and controlling them as described above, the same dots on the light sensitive medium is exposed twice to the same intensity light, and thus are given a doubled light energy. In other words, in order to give the same intensity light to the dots on the light sensitive medium, the scanning number can be reduced by half, for example, 12 times from 24 as shown in Figs. 10a to 10k. This enables the printing speed of the electrophotographic printing system to be increased.

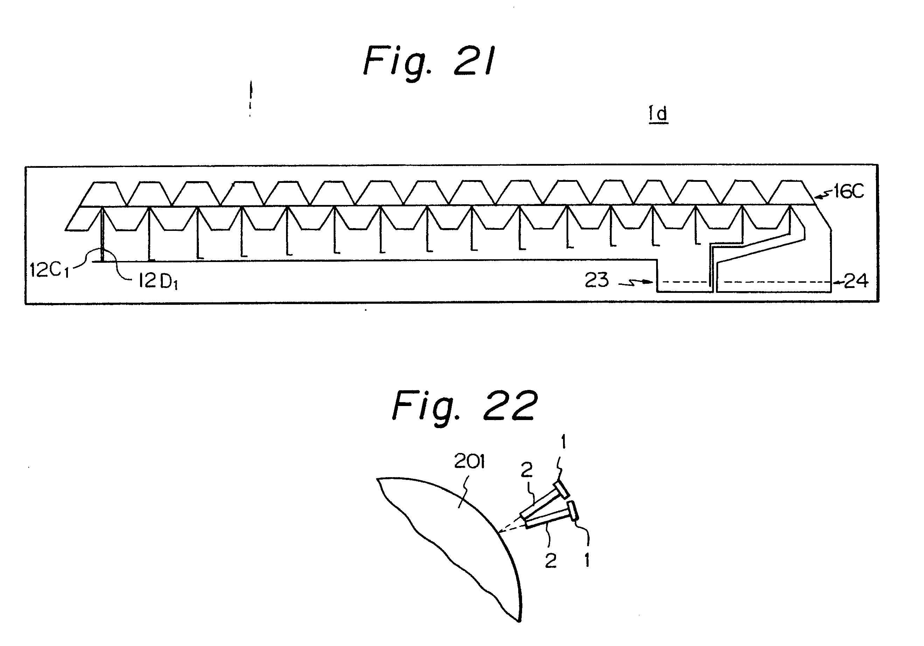

Referring to Fig. 21, another EL device 1d using the electrode arrangement shown in Figs. 15a to 15c of two rows of EL elements, similar to that in Fig. 16, is represented. A trapezoid meander-formed transparent electrode 16C consisting of 64 sub-transparent electrodes $16C_1$ to $16C_{64}$ as shown in Fig. 15a is formed, and 32 parts of rear-electrodes $12C_1$ and $12D_1$ to $12C_{32}$ and $12D_{32}$ are also formed. A portion 23 is a terminal for connecting the rear-electrodes to the pull-only driver circuit, and portion 24 is a terminal for connecting the sub-transparent electrodes to the push-up driver circuit.

This electrode arrangement has the advantage that the trapezoid meander-formed transparent electrode 16C is used to form two rows of EL elements.

A control circuit for controlling the EL device 1d shown in Fig. 21 may be constructed by combining the circuit shown in Fig. 14 with that shown in Fig. 19.

In order to further increase the intensity of light emitted from the EL device and exposed on the light sensitive layer, three or more rows of EL elements may be provided together with another focusing lens unit having three or more lens arrays adjusted thereto. Two or more EL devices, each having two rows of EL elements set forth above and two or more focusing lens units each also having two focusing lens arrays, can also be combined, as shown in Fig. 22.

## Claims

1. An electrophotographic printer of the kind including a rotary light-sensitive drum (201) and an electroluminescence device (1) mounted alongside the drum (201) and energisable selectively to produce an image on a light-sensitive circumferential layer of that drum (201), which device (1) comprises:

   a light-emitting layer (15) located between and electrically insulated from an elongate electrode (12), which extends in a direction parallel to the axis of rotation of the said drum (201), and an array of opposing transparent electrode portions (16) formed on a transparent substrate (11), which portions

EP 0 225 693 B1

extend transversely with respect to the said direction so as to cross the said elongate electrode (12) at respective different locations therealong, thereby defining an array of electroluminescence elements, at the said respective different locations, any one of which elements can be energised selectively by application of a predetermined A.C. energising pulse between the said elongate electrode (12) and the opposing transparent electrode portion (16) that crosses that elongate electrode (12) at the location concerned;

characterised in that the said elongate electrode (12) is one of a row of elongate electrodes ($12_1$,..., $12_{32}$) aligned one after another in the said direction, and crossed by respective such arrays ($16_1$, ..., $16_{64}$; $16_{65}$, ..., $16_{128}$;...) of opposing transparent electrode portions, respective first electrode portions ($16_1$, $16_{65}$, ..., $16_{1985}$) of the said arrays being connected to one of a set of energisation terminals of the device (1), respective second electrode portions ($16_2$, $16_{66}$, ..., $16_{1986}$) of the said arrays being connected to a second energisation terminal of the said set, and so on so that any selected electroluminescence element of the device (1) can be energised individually by application of such a pulse between one of the said energisation terminals and one of the said elongate electrodes ($12_1$, ..., $12_{32}$).

2. A printer as claimed in claim 1, further comprising a second such device whose row of elongate electrodes (12B) extends alongside the row of claim 1, the said second device being connected with means operable at a predetermined time after energisation of a selected set of electroluminescence elements of the device of claim 1 to energise the corresponding set of electroluminescence elements of the said second device, thereby to reinforce an image produced on the said light-sensitive circumferential layer of the drum (201) by the device of claim 1.

3. A printer as claimed in claim 1 or 2, wherein in the or each said device, as the case may be, the said respective first electrode portions ($16_1$, $16_{65}$,..., $16_{1985}$) are interconnected in series by additional conductive portions so as to form a single conductive path ($16_{a1}$) which passes to and fro across the row of elongate electrodes ($12_{a1}$, ..., $12_{a32}$) of the device concerned in a regularly repeated manner, the said respective second electrode portions ($16_2$, $16_{66}$, ..., $16_{1986}$) are interconnected in series by further conductive portions so as to form another single conductive path ($16_{a2}$) which passes to and fro across the row of elongate electrodes ($12_{a1}$, ..., $12_{a32}$) concerned in a regularly repeated manner, and so on for successive sets of respective electrode portions of the device concerned.

4. A printer as claimed in claim 3, wherein the course followed by each such conductive path ($16_{a1}$, ..., $16_{a64}$) between successive points at which that path crosses the said row of elongate electrodes ($12_{a1}$,..., $12_{a32}$) is substantially rectangular.

5. A printer as claimed in claim 3, wherein each such conductive path ($16_{b1}$ to $16_{b64}$) includes, between successive points at which that path crosses the said row of elongate electrodes ($12_{b1}$, ..., $12_{b32}$), a section which extends parallel to the said row and is shorter than the distance between those successive points.

6. A printer as claimed in claim 3, wherein the course followed by each such conductive path ($16_{a1}$, ..., $16_{a64}$) between successive points at which that path crosses the said row of elongate electrodes ($12_{a1}$,..., $12_{a32}$) is a half-circle.

7. A printer as claimed in any one of claims 3 to 6, wherein an image to be printed by the printer is stored therein as bit-form data, the printer further comprising data ordering means (41) for controlling the order in which the said bit-form data is delivered to pulse generating means of the printer, the order of the bit-form data being controlled in dependence upon the order, with respect to the said direction, in which the opposing transparent electrode portions in each array ($16_1$ to $16_{64}$; $16_{65}$ to $16_{128}$;...) thereof cross the said elongate electrode corresponding thereto.

8. A printer as claimed in any preceding claim, operable to bring about repeated simultaneous energisation of electroluminescence elements in the or each said device, as the case may be, in accordance with the image to be printed, such energisation being repeated a preset number of times within a preselected ON period and each energisation being of a preset duration, and further operable to maintain the electroluminescence elements of the or each said device, in a de-energised state for a preselected OFF period after each energisation.

11

9. A printer as claimed in claim 8, wherein the said preset number and the said preset duration are chosen so as to result in the emission of a desired intensity of light, which intensity is sufficient to form a desired image on the said light-sensitive circumferential layer of the drum (201), and wherein the length of the said preselected OFF period is such that at the end of that period the intensity of light emitted is not sufficient for the formation of an image on the said layer.

10. A printer as claimed in any preceding claim, wherein the separation ($P_1$) between adjacent opposing transparent electrode portions ($16_1$, $16_2$, ...) in each of the said arrays thereof is determined by the required resolution of an image to be printed.

**Revendications**

1. Imprimante électrophotographique du type qui comprend un tambour photosensible rotatif (201) et un dispositif électroluminescent (1) monté le long du tambour (201) et qui peut être excité sélectivement afin qu'il forme une image sur une couche photosensible circonférentielle de ce tambour (201), le dispositif (1) comprenant :
   une couche photoémissive (15) placée entre une électrode allongée (12), disposée en direction parallèle à l'axe de rotation du tambour (201), et une matrice de parties transparentes opposées (16) d'électrode formées sur un substrat transparent (11), la couche étant isolée par rapport à l'électrode et à la matrice, les parties de la matrice étant disposées transversalement à ladite direction afin qu'elles recoupent l'électrode allongée (12) à des emplacements respectifs différents sur sa longueur et délimitent ainsi une matrice d'éléments électroluminescents, à ces emplacements respectifs différents, l'un quelconque de ces éléments pouvant être excité sélectivement par application d'une impulsion alternative prédéterminée d'excitation entre l'électrode allongée (12) et la partie opposée d'électrode transparente (16) qui recoupe cette électrode allongée (12) à l'emplacement concerné,
   caractérisé en ce que l'électrode allongée (12) fait partie d'une ligne d'électrodes allongées ($12_1$,... $12_{32}$) alignées les unes après les autres dans ladite direction et qui sont recoupées par les matrices respectives ($16_1$,...$16_{64}$ ; $16_{65}$,...$16_{128}$ ;...) de parties opposées d'électrode transparente, des premières parties respectives d'électrode ($16_1$, $16_{65}$,...$16_{1985}$) des matrices étant connectées à une borne d'un ensemble de bornes d'excitation du dispositif (1), des secondes parties respectives d'électrode ($16_2$, $16_{66}$,...$16_{1986}$) desdites matrices étant connectées à une seconde borne d'excitation de cet ensemble, et ainsi de suite, si bien qu'un élément électroluminescent choisi quelconque du dispositif (1) peut être excité individuellement par application d'une telle impulsion entre l'une des bornes d'excitation et l'une des électrodes allongées ($12_1$,...$12_{32}$).

2. Imprimante selon la revendication 1, comprenant en outre un second dispositif dont la ligne d'électrodes allongées (12B) est disposée le long de la ligne de la revendication 1, le second dispositif étant connecté à un dispositif qui fonctionne à un moment prédéterminé après l'excitation d'un ensemble choisi d'éléments électroluminescents du dispositif de la revendication 1 afin que l'ensemble correspondant d'éléments électroluminescents du second dispositif soit excité, si bien que l'image produite sur la couche circonférentielle photosensible du tambour (201) par le dispositif de la revendication 1 est renforcée.

3. Imprimante selon la revendication 1 ou 2, dans laquelle, dans le dispositif ou chaque dispositif selon le cas, les premières parties respectives d'électrode ($16_1$, $16_{65}$,...$16_{1985}$) sont interconnectés en série par des parties conductrices supplémentaires afin qu'elles forment un seul trajet conducteur ($16_{a1}$) qui passe alternativement sur la ligne d'électrodes allongées ($12_{a1}$,...$12_{a32}$) du dispositif concerné de manière répétée et régulière, les secondes parties respectives d'électrode ($16_2$, $16_{66}$,...$16_{1986}$) sont interconnectées en série par d'autres parties conductrices afin qu'elles forment un autre trajet conducteur unique ($16_{a2}$) qui passe alternativement sur la ligne d'électrodes allongées ($12_{a1}$,...$12_{a32}$) concernée d'une manière qui se répète régulièrement, et ainsi de suite pour les ensembles successifs de parties respectives d'électrode du dispositif concerné.

4. Imprimante selon la revendication 3, dans lequel le trajet suivi par chacun des trajets conducteurs ($16_{a1}$,...$16_{a64}$) entre les points successifs auxquels le trajet recoupe la ligne d'électrodes allongées ($12_{a1}$,...$12_{a32}$) est sensiblement rectangulaire.

5. Imprimante selon la revendication 3, dans laquelle chaque trajet conducteur ($16_{b1}$ à $16_{b64}$) comporte, entre des points successifs auxquels ce trajet recoupe la ligne d'électrodes allongées ($12_{b1},...12_{b32}$), un tronçon qui est parallèle à ladite ligne et qui est plus court que la distance comprise entre ces points successifs.

6. Imprimante selon la revendication 3, dans laquelle le trajet suivi par chacun des trajets conducteurs ($16_{a1},...16_{a64}$) entre les points successifs auxquels le trajet recoupe la ligne d'électrodes allongées ($12_{a1},...12_{a32}$) est un demi-cercle.

7. Imprimante selon l'une quelconque des revendications 3 à 6, dans laquelle une image à imprimer par l'imprimante est mémorisée dans celle-ci sous forme de données de bits, l'imprimante comprenant en outre un dispositif (41) destiné à ordonner les données et à régler l'ordre de transmission des données sous forme de bits au dispositif générateur d'impulsions de l'imprimante, l'ordre des données sous forme de bits étant réglé d'après l'ordre, par rapport à ladite direction, dans lequel les parties transparentes opposées d'électrode de chaque matrice ($161$ à $16_{64}$ ; $16_{65}$ à $16_{128}$ ;...) recoupent l'électrode allongée correspondante.

8. Imprimante selon l'une quelconque des revendications précédentes, destinée à assurer l'excitation simultanée répétée des éléments électroluminescents dans le dispositif ou chaque dispositif selon le cas, en fonction de l'image à imprimer, cette excitation étant répétée un nombre préréglé de fois dans une période prédéterminée de conduction et chaque excitation ayant une durée préréglée, l'imprimante étant en outre destinée à maintenir les éléments électroluminescents du dispositif ou de chaque dispositif à un état désexcité pendant une période prédéterminée de non conduction après chaque excitation.

9. Imprimante selon la revendication 8, dans laquelle e nombre préréglé et la dureté préréglée sont choisis afin qu'ils provoquent l'émission de lumière d'intensité voulue, cette intensité étant suffisante pour la formation d'une image voulue sur la couche photosensible circonférentielle du tambour (201), et la durée de la période préréglée de non conduction est telle que, à la fin de cette période, l'intensité de la lumière émise ne suffit pas pour la formation d'une image sur la couche.

10. Imprimante selon l'une quelconque des revendications précédentes, dans laquelle la distance ($P_1$) séparant les parties adjacentes d'électrodes transparentes opposées ($16_1$, $16_2$,..) de chacune des matrices est déterminée par la résolution que doit avoir une image à imprimer.

**Ansprüche**

1. Elektrophotographischer Drucker von der Art, die eine rotierende lichtempfindliche Trommel (201) und eine Elektrolumineszenzvorrichtung (1) enthält, die längs der Trommel (201) montiert ist und selektiv mit Energie versorgt werden kann, um ein Bild auf einer lichtenpfindlichen Umfangsschicht von jener Trommel (201) zu erzeugen, welche Vorrichtung (1) umfaßt:

eine lichtemittierende Schicht (15), die zwischen und elektrisch isoliert von einer länglichen Elektrode (12), die sich in einer Richtung parallel zu der Rotationsachse der Trommel (201) erstreckt, und einem Feld von gegenüberliegenden transparenten Elektrodenabschnitten (16), die auf einem transparenten Substrat (11) gebildet sind, angeordnet ist, welche Abschnitte sich quer in Bezug auf die genannte Richtung so erstrecken, daß sie die genannte längliche Elektrode (12) an entsprechend verschiedenen Orten ihrer Länge kreuzen, wodurch ein Feld von Elektrolumineszenzelementen an den genannten entsprechend verschiedenen Orten gebildet wird, wobei irgend eines jener Elemente selektiv mit Energie versorgt werden kann, durch Anwenden eines vorbestimmten erregenden Wechselstromimpulses zwischen der genannten länglichen Elektrode (12) und dem gegenüberliegenden transparenten Elektrodenabschnitt (16), welcher jene längliche Elektrode (12) an dem betreffenden Ort kreuzt;

dadurch gekennzeichnet, daß die genannte längliche Elektrode (12) eine von einer Reihe von länglichen Elektroden ($12_1$, ..., $12_{32}$) ist, die eine nach der anderen in der genannten Richtung ausgerichtet sind, und durch entsprechende solche Felder ($16_1$, ..., $16_{64}$; $16_{65}$, ..., $16_{128}$; ...) von gegenüberliegenden transparenten Elektrodenabschnitten gekreuzt wird, wobei jeweils erste Elektrodenabschnitte ($16_1$, $16_{65}$, ..., $16_{1985}$) der genannten Felder mit einem von einem Satz von Energieversorgungsanschlüssen der Vorrichtung (1) verbunden sind, jeweils zweite Elektrodenabschnitte ($16_2$, $16_{66}$,

13

EP 0 225 693 B1

..., $16_{1986}$) der genannten Anordnungen mit einem zweiten Energieversorgungsanschluß des genannten Satzes verbunden sind, und so weiter, so daß irgendein ausgewähltes Elektrolumineszenzelement der Vorrichtung (1) individuell durch Anwenden eines solchen Impulses zwischen einem der genannten Energieversorgungsanschlüsse und einer der genannten länglichen Elektroden ($12_1$, ..., $12_{32}$) mit Energie versorgt werden kann.

2. Drucker nach Anspruch 1, ferner mit einer zweiten solchen Vorrichtung, deren Reihe von länglichen Elektroden (12B) sich längs der Reihe von Anspruch 1 erstreckt, wobei die genannte zweite Vorrichtung mit Einrichtungen verbunden ist, die zu einer vorbestimmten Zeit nach Erregung des ausgewählten Satzes von Elektrolumineszenzelementen der Vorrichtung nach Anspruch 1 betreibbar sind, um den entsprechenden Satz von Elektrolumineszenzelementen der genannten zweiten Vorrichtung zu erregen, um dadurch das Bild zu verstärken, das auf der lichtempfindlichen Umfangsschicht der Trommel (201) durch die Vorrichtung nach Anspruch 1 erzeugt wird.

3. Drucker nach Anspruch 1 oder 2, bei dem in der oder jeder genannten Vorrichtung, wie es der Fall sein mag, die genannten entsprechenden ersten Elektrodenabschnitte ($16_1$, $16_{65}$, ..., $16_{1985}$) in Reihe durch zusätzliche leitende Abschnitte zwischenverbunden sind, um so einen einzelnen leitenden Weg ($16_{a1}$) zu bilden, der hin und her quer über die Reihe der länglichen Elektroden ($12_{a1}$, ..., $12_{a32}$) der betreffenden Vorrichtung verläuft, in regelmäßig wiederholter Weise, und die genannten entsprechenden zweiten Elektrodenabschnitte ($16_2$, $16_{66}$, ..., $16_{1986}$) in Reihe durch weitere leitende Abschnitte miteinander verbunden sind, um so einen anderen einzelnen leitenden Weg ($16_{a2}$) zu bilden, der hin und her quer über die Reihe der betreffenden länglichen Elektroden ($12_{a1}$, ..., $_{12}a32$) verläuft, in regelmäßig wiederholter Weise, und so weiter für aufeinanderfolgende Sätze von entsprechenden Elektrodenabschnitten der betreffenden Vorrichtung.

4. Drucker nach Anspruch 3, bei dem jeder Lauf, dem jeder solche leitende Weg ($16_{a1}$, ..., $16_{a64}$) zwischen aufeinanderfolgenden Punkten, bei welchen jener Weg die genannte Reihe von länglichen Elektroden ($12_{a1}$, ..., $12_{a32}$) kreuzt, folgt, im wesentlichen rechtwinklig ist.

5. Drucker nach Anspruch 3, bei dem jeder solche leitende Weg ($16_{b1}$ bis $16_{b64}$), zwischen aufeinanderfolgenden Punkten, bei denen jener Weg die genannte Reihe von länglichen Elektroden ($12_{b1}$, ..., $12_{b32}$) kreuzt, einen Abschnitt enthält, der sich parallel zu der genannten Reihe erstreckt und kürzer als der Abstand zwischen jenen aufeinanderfolgenden Punkten ist.

6. Drucker nach Anspruch 3, bei dem der Lauf, dem jeder solcher leitende Weg ($16_{a1}$, ..., $16_{a64}$) folgt, zwischen aufeinanderfolgenden Punkten, bei denen jener Weg die genannte Reihe von länglichen Elektroden ($12_{a1}$, ..., $12_{a32}$) kreuzt, ein Halbkreis ist.

7. Drucker nach einem der Ansprüche 3 bis 6, bei dem ein Bild, das von dem Drucker zu drucken ist, darin als bit-förmige Daten gespeichert ist, wobei der Drucker ferner Datenordnungseinrichtungen (41) enthält, um die Ordnung zu steuern, in der die genannten bit-förmigen Daten an eine Pulsgeneratoreinrichtung des Druckers geliefert werden, wobei die Ordnung der bit-förmigen Daten in Abhängigkeit von der Ordnung gesteuert wird, in Bezug auf die genannte Richtung, in welcher die gegenüberliegenden transparenten Elektrodenabschnitte in jedem ihrer Felder ($16_1$ bis $16_{64}$; $16_{65}$ bis $16_{128}$; ...) die ihr entsprechende längliche Elektrode kreuzen.

8. Drucker nach einem der vorhergehenden Ansprüche, betreibbar um eine gleichzeitige Erregung von Elektrolumineszenzelementen in der oder jeder Vorrichtung, wie es der Fall sein mag, herbeizuführen, in Übereinstimmung mit einem zu druckenden Bild, wobei solch eine Erregung eine vorbestimmte Zahl von Malen innerhalb einer vorausgewählten EIN-Periode wiederholt wird, und jede Erregung von einer voreingestellten Dauer ist, und ferner betreibbar, um die Elektrolumineszenzelemente von der oder jeder Vorrichtung für eine vorausgewählte AUS-Periode nach jeder Erregung in einem Ent-Erregungszustand zu halten.

9. Drucker nach Anspruch 8, bei dem die genannte voreingestellte Zahl und die genannte voreingestellte Dauer so ausgewählt sind, daß sie zu einer Emission von einer gewünschten Lichtintensität führen, welche Intensität ausreicht, um ein gewünschtes Bild auf der genannten lichtempfindlichen Umfangsschicht der genannten Trommel zu bilden, wobei die Länge der genannten vorausgewählten AUS-

14

Periode derart ist, daß bei dem Ende von jener Periode die Intensität des emittierten Lichtes für die Bildung eines Bildes auf der genannten Schicht nicht ausreicht.

10. Drucker nach einem der vorhergehenden Ansprüche, bei dem die genannte Trennung (P₁) zwischen den benachbarten gegenüberliegenden transparenten Elektrodenabschnitten (16₁, 16₂, ...) in jedem ihrer genannten Felder durch die erforderliche Auflösung des zu druckenden Bildes bestimmt ist.

# Fig. 1

# Fig. 2

# Fig. 3

PRIOR ART

<u>3'</u>

SDATA ⟶ | SHIFT REGISTER | 307

| LATCH | 308

309

TIMING CONT 301

Y-CLK 302 ⟶ YCLK — 305 — SY

INTERVAL CONT 303 ⟶ SENA

306

X-CLK 304 ⟶ XCLK — SX

X-DRVR 311 ⟶ XVD

Y-DRIVER 310

YVDi

~10'

EP 0 225 693 B1

## Fig. 4

## Fig. 5

## Fig. 6

## Fig. 7

Fig. 8

*Fig. 9a*  CYCLE  1  2  32

*Fig. 9b*  VDi

*Fig. 9c*  VSi  $V_L$  $V_F$  $V_H$

*Fig. 9d*  VDRV₁

*Fig. 9e*  LI₁

*Fig.11*

16a
16a₁
16a₂
16a₃
16a₆₄

12a₂
16a₁
16a₂
12a₃₂

16a₆₄

12a
12a₁
12a₃

Fig.10a SYNC ROW

Fig.10b SYNC DIV

Fig.10c VD₁,₆₅,...

Fig.10d VD₂,₆₆,...

Fig.10e VD₆₄,₁₂₈,...

Fig.10f VS₁

Fig.10g VS₂

Fig.10h VS₃₂

Fig.10i VDRV₁

Fig.10j VDRV₂

Fig.10k VDRV₃₂

## Fig. 12

1a

12a

12a_{31}

12a_{32}

19

15

13

11

16a_2   16a_1   16a_1   16a_2        16a_{64}   16a

## Fig. 13

16a   12a_{32}   16a_1   16a_2

16a_{64}

12a

12a_{31}   11

# Fig. 14

EP 0 225 693 B1

# Fig. 15a

16b₁

16b₂

12b₁₀

16b₆₂

16b₆₃

12b₁₁

16b₆₄

A

# Fig. 15b

16 b₆₄

# Fig. 15c

12b₁₀

12b₁₁

# Fig. 16

# Fig. 17

26

# Fig. 18

# Fig. 19

Fig. 20a

Fig. 20b at t1

Fig. 20c at t2

Fig. 20d at t3

# Fig. 21

# Fig. 22

EP 0 225 693 B1